(19) Europäisches Patentamt
European Patent Office
Office européen des brevets

(11) EP 0 998 525 B1

(12) **EUROPÄISCHE PATENTSCHRIFT**

(45) Veröffentlichungstag und Bekanntmachung des Hinweises auf die Patenterteilung:
**16.05.2001 Patentblatt 2001/20**

(21) Anmeldenummer: **98942546.7**

(22) Anmeldetag: **14.07.1998**

(51) Int Cl.[7]: **C08K 5/00**, C08L 69/00, C08J 7/04, B32B 27/18 // (C08K5/00, 5:3475, 5:103), C08K5:103

(86) Internationale Anmeldenummer:
**PCT/EP98/04356**

(87) Internationale Veröffentlichungsnummer:
**WO 99/05205 (04.02.1999 Gazette 1999/05)**

(54) **POLYCARBONATFORMMASSEN UND IHRE VERWENDUNG ALS BESCHICHTUNGEN IN COEXTRUDIERTEN PLATTEN**

POLYCARBONATE MOULDING COMPOUNDS AND THEIR USE AS LAYERS IN COEXTRUDED SHEETS

MATIERES DE MOULAGE EN POLYCARBONATE ET LEUR UTILISATION COMME REVETEMENTS DANS DES PLAQUES COEXTRUDEES

(84) Benannte Vertragsstaaten:
**AT BE DE ES FR GB IT NL**

(30) Priorität: **25.07.1997 DE 19732090**

(43) Veröffentlichungstag der Anmeldung:
**10.05.2000 Patentblatt 2000/19**

(73) Patentinhaber: **Bayer Aktiengesellschaft**
**51368 Leverkusen (DE)**

(72) Erfinder:
- **ANDERS, Siegfried**
  **D-51147 Köln (DE)**
- **LÖWER, Hartmut**
  **D-47802 Krefeld (DE)**
- **NISING, Wolfgang**
  **D-53757 Sankt Augustin (DE)**
- **HAESE, Wilfried**
  **D-51519 Odenthal (DE)**

(56) Entgegenhaltungen:
**EP-A- 0 320 632** **EP-A- 0 492 550**
**EP-A- 0 575 177** **EP-A- 0 764 686**
**DE-A- 2 729 485**

- **PATENT ABSTRACTS OF JAPAN vol. 014, no. 539 (C-0782), 28. November 1990 & JP 02 225558 A (TEIJIN CHEM LTD), 7. September 1990 in der Anmeldung erwähnt -& JP 02 225558 A (TEIJIN)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 998 525 B1

Printed by Jouve, 75001 PARIS (FR)

## Beschreibung

Gegenstand der vorliegenden Erfindung sind Formmassen enthaltend

a) thermoplastische aromatische Polycarbonate
mit einem Gewichtsmittelmolekulargewicht $\overline{M}_w$, (gemessen in bekannter Weise) von 27 000 bis 40 000, vorzugsweise von 30 000 bis 36 000 und insbesondere von 32 000 bis 36 000,

b) einen UV-Absorber, der ein Molekulargewicht von 370, vorzugsweise von 500, und größer, vorzugsweise von 500 bis 3 000 hat, in Mengen von 3,5 bis 20 Gew.-%, vorzugsweise von 5 Gew.-% bis 15 Gew.-%, bezogen auf Gewicht Polycarbonat, und

c) 2 Arten von Entformungsmitteln bestehend aus

c.1) Glycerinmonofettsäureestern in Mengen von 0,01 bis 0,1 Gew.-%, bezogen auf Gewicht Polycarbonat und

c.2) (Teil)Estern von vier- bis sechswertigen Alkoholen, in Mengen von 0,05 bis 0,25 Gew.-%, bezogen auf Gewicht Polycarbonat,

die dadurch gekennzeichnet sind, daß das Gewichtsverhältnis von c.1) zu c.2) zwischen 1/25 und 1/2 und vorzugsweise zwischen 4/25 und 10/25 liegt.

Die erfindungsgemäßen Polycarbonatformmassen sind insbesondere geeignet als Beschichtungen für Polycarbonatplatten, die vorzugsweise nach dem Verfahren der Coextrusion hergestellt werden.

Gegenstand der vorliegenden Erfindung ist somit auch die Verwendung der erfindungsgemäßen Polycarbonatformmassen als UV-Absorber-haltige Deckschicht, vorzugsweise als Außenschicht in coextrudierten Polycarbonatplatten.

Gegenstand der vorliegenden Erfindung ist somit auch ein Verfahren zur Herstellung von Schichtstoffen aus thermoplastischen Polycarbonaten durch die bekannte Methode der Coextrusion, das dadurch gekennzeichnet ist, daß man für die Außenschicht der Schichtstoffe die erfindungsgemäßen Polycarbonatformmassen einsetzt.

Gegenstand der vorliegenden Erfindung sind außerdem die nach dem erfindungsgemäßen Verfahren erhältlichen Schichtstoffe aus thermoplastischen aromatischen Polycarbonaten.

Die EP-A-0 320 632 (Le A 25 600) beschreibt coextrudierte Platten aus UV-Absorber-haltigen Polycarbonaten mit einer relativen Lösungsviskosität von 1,31 (gemessen bei 25°C in 0,5 %iger Lösung in Dichlormethan), was einem $\overline{M}_w$ (Gewichtsmittelmolekulargewicht) von etwa 31 000 entspricht (Seite 10, Beispiel). Die UV-Absorber haben ein $\overline{M}_n$ >500 und werden besonders bevorzugt in Mengen von 5 Gew.-% bis 10 Gew.-% eingesetzt (Seite 2, Zeile 38). Gleitmittel und/oder Entformungsmittel können zugesetzt werden (Seite 9, Zeile 43).

Derartige Platten können nun noch optimiert werden bezüglich der Querwelligkeit der Oberfläche der Platten, dem Ausdampfverhalten des UV-Absorbers aus der Polycarbonatschmelze, besonders bei der Coextrusion unter Anlegung von Vakuum, das für die Herstellung von Hohlkammerplatten notwendig ist, und bezüglich des Polycarbonatabriebs, der beim Erkalten der coextrudierten Polycarbonatplatte durch den Kalibrator des Extruders verursacht werden kann.

Das vermehrte Ausdampfen des UV-Absorbers aus der Polycarbonatschmelze führt zur Verschmutzung des Kalibrators und schließlich zur Bildung von weißen Flecken an den Oberflächen der Platten. Der Polycarbonatabrieb führt zu pulverigen Ablagerungen auf den coextrudierten Polycarbonatplatten.

Aufgabe der vorliegenden Erfindung war es nun, das Coextrusionsverfahren gemäß EP 0 320 632 sicherer zu machen, damit auch bei längeren Arbeitsabläufen, insbesondere bei kontinuierlicher Fahrweise, die gute Qualität der Oberflächen der coextrudierten Polycarbonatplatten behalten und sogar noch verbessert werden kann. Dies wird erfindungsgemäß durch den Zusatz der speziellen Esterkombination erreicht.

EP-B-0 213 413 beschreibt zwar den Einsatz von Esterkombinationen (Seite 6, Zeilen 25 bis 37) zu Polycarbonaten, die Menge an UV-Absorber beträgt aber nur 0,1 bis 0,7 Gew.-% (Seite 6, Zeile 42); darüberhinaus haben die dort genannten UV-Absorber ein $M_n$ von <500 (Seite 6, Zeilen 43 bis 45). Das Molekulargewicht des Polycarbonats liegt zwischen 13 000 und 18 000 (Seite 2, Zeilen 11 und 12). Die Herstellung von Platten aus diesen Polycarbonaten erfolgt nicht durch Extrusion oder Coextrusion (Seite 6, Zeile 64 bis Seite 7, Zeile 2). Somit gibt die Lehre von EP 0 213 413 keinen Hinweis zur Lösung der gestellten Aufgabe.

Die japanische Offenlegungsschrift Hei-2-225 558 beschreibt die Herstellung von Polycarbonatplatten durch Extrusion und hat das Ziel, Platten mit extrem guten Oberflächen herzustellen (s. Einleitung von Hei). Das eingesetzte Polycarbonat hat ein $\overline{M}_w$ von beispielsweise 27 700 (Beispiele von Hei). Um Platten mit guten Oberflächen zu erhalten, werden gemäß Hei Teilester von mehrwertigen Alkoholen zugesetzt (s. Anspruch von Hei). Als Teilester werden beispielsweise Glycerinmonostearat und Pentaerythritmonopalmitat genannt. Es können auch Estergemische eingesetzt werden. Glycerinmonostearat und Mischungen mit Glycerinmonostearat als Hauptkomponente sind bevorzugt. UV-Absorber in Mengen von 0,1 bis 0,7 Gew.-% können gemäß Hei den Polycarbonaten zugesetzt werden, wobei UV-Absorber mit $M_n$ >500 nicht erwähnt sind. Hei-2-225 558 lehrt allerdings nicht den UV-Schutz durch Beschichtungen und erwähnt auch nicht die Coextrusion.

Unsere Vergleichsversuche zeigen aber, daß es auf das konträre Verhältnis der Ester ankommt (Vergleich D) und außerdem 0,7 Gew.-% UV-Absorber nicht ausreichen, damit die Beschichtung einen ausreichenden Schutz gegen Bewitterung bietet (Vergleich E).

Gemäß EP-A-0 300 485, Beispiel 1, Seite 8, wird zwar als Entformungsmittel eine Mischung von 0,01 Teilen Glycerinmonostearat und 0,03 Teilen Pentaerythrittetrastearat dem Polycarbonat zur Extrusion zugesetzt. Die EP-A enthält jedoch keinen Hinweis auf den Zusatz von UV-Absorbern.

Aus unserer EP-A-0 649 724 (Le A 29 892) ist ein Verfahren zur Herstellung von mehrschichtigen Kunststofftafeln auf verzweigten Polycarbonaten mit Molmassen $\overline{M}_w$ von 27 000 bis 29 500 durch Coextrusion von einer Kernschicht und mindestens einer Deckschicht mit 1 Gew.-% bis 15 Gew-% an UV-Absorber bekannt. Die erhaltenen Kunststofftafeln haben excellente Oberflächen.

Auf Seite 5, Zeile 9 der EP-A wird erwähnt, daß den verzweigten Polycarbonaten außer den UV-Absorbern auch noch die üblichen Entformungsmittel zugesetzt werden können.

Setzt man nun den verzweigten Polycarbonaten der EP-A-0 649 724 übliche Entformungsmittel zu, in der Hoffnung, Polycarbonatplatten mit guten Oberflächeneigenschaften auch oberhalb des für die Verarbeitung kritischen Molekulargewichts von 29 500 herstellen zu können, dann stellt man überraschend fest, daß sowohl Pentaerythrittetrastearat als auch Glycerinmonostearat als auch Mischungen dieser beiden mit Glycerinmonostearat als Hauptkomponente entweder bezüglich der UV-Absorberablagerung oder bezüglich des Polycarbonatabriebs zu schlechten Oberflächen der coextrudierten Platten führen.

Lediglich das umgekehrte Verhältnis von Pentaerythrittetrastearat und Glycerinmonostearat führt überraschenderweise zu coextrudierten Platten mit excellenten Oberflächen auch oberhalb des in der EP-A-0 649 724 beanspruchten, kritischen Molekulargewichts von 29 500.

Gemäß EP-A-0 732 360 sind Polycarbonate mit einem Gehalt von zwei Sorten von Estern (Anspruch 1) bekannt. UV-Stabilisatoren können zugesetzt werden (Seite 3, Zeile 11). Art und Menge der UV-Stabilisatoren sind nicht beschrieben.

Thermoplastische, aromatische Polycarbonate für die UV-Absorber-haltige Deckschicht im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-%, bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsummiert werden.

Die Herstellung der erfindungsgemäß zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt werden, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf "Schnell", Chemistry an Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly (ester Carbonate) Copolymers" in Journal of Polymer Science, Polymer Chemistry Edition, Vol. 19, 75-90 (1980), auf D. Freitag, U. Grigo, P.R. Müller, N. Nouvertne', BYER AG, "Polycarbonates" in Encyclopedia of Polymer Science and Engineering, Volume 11, Second Edition, 1988, Seiten 648-718 und schließlich auf Dres. U. Grigo, K. Kircher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte $\overline{M}_w$ (ermittelt durch Messung der relativen Viskosität bei 25°C in $CH_2Cl_2$ und einer Konzentration von 0,5 g pro 100 ml $CH_2Cl_2$) von 27 000 bis 40 000, vorzugsweise von 30 000 bis 36 000 und insbesondere von 32 000 bis 36 000.

Für die Herstellung der erfindungsgemäß zu verwendenden Polycarbonate geeignete Diphenole sind beispielsweise Hydrochinon. Resorcin, Dihydroxydiphenyl, Bis-(hydroxyphenyl)-alkane, Bis(hydroxyphenyl)-cycloalkane,

Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (I)

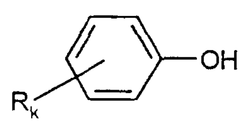

(I) ,

worin

$R_k$ Wasserstoff oder ein verzweigter oder unverzweigter $C_4$- bis $C_9$-Alkylrest ist. Besonders bevorzugt sind solche Kettenabbrecher, worin $R_k$ ein verzweigter oder unverzweigter $C_8$- und/oder $C_9$-Alkylrest ist.

Die Menge an einzusetzendem Kettenabbrecher ist dem Fachmann bekannt. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa(4-(4-hydroxyphenyl-isopropyl)phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.
Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate sind das bekannte Grenzflächenverfahren und das bekannte Schmelzumesterungsverfahren.

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Glycerinmonofettsäureester sind solche des Glycerins mit gesättigten, aliphatischen $C_{10}$-$C_{26}$-Monocarbonsäure, vorzugsweise mit gesättigten, aliphatischen $C_{14}$-$C_{22}$-Monocarbonsäuren.

Als Glycerinmonofettsäureester sind sowohl die der primären OH-Funktion des Glycerins als auch die der sekundären OH-Funktion des Glycerins zu verstehen sowie Mischungen dieser beiden isomeren Verbindungsklassen.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure.

Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure.

Besonders bevorzugt gesättigte, aliphatische Monocarbonsäuren sind Palmitinsäure, Stearinsäure und Behensäure.

Die gesättigten, aliphatischen $C_{10}$-$C_{26}$-Carbonsäuren und die erfindungsgemäß einzusetzenden Glycerinmonofettsäureester sind als solche entweder literaturbekannt oder nach literaturbekannten Verfahren herstellbar (s. beispielsweise Fieser und Fieser, Organische chemie GmbH, Weinheim, Bergstr. 1965, Kap. 30, Seite 1206 ff.). Beispiele für Glycerinmonofettsäureester sind die der besonders bevorzugten, vorstehend genannten Monocarbonsäuren.

(Teil)Ester von vier- bis sechswertigen Alkoholen sind ebenfalls solche der vier-, fünf- oder sechswertigen Alkohole mit gesättigten, aliphatischen $C_{10}$-$C_{26}$-Monocarbonsäuren, vorzugsweise mit gesättigten, aliphatischen $C_{14}$-$C_{22}$-Monocarbonsäuren und insbesondere den Palmitin-, Stearin- und Behensäure.

Die vollständig veresterten sind gegenüber den teilveresterten Alkoholen bevorzugt, ebenso die vierwertigen Alkohole gegenüber den fünfwertigen und den sechswertigen Alkoholen.

Geeignete, gesättigte aliphatische $C_{10}$-$C_{26}$-Monocarbonsäuren sind die vorstehend bereits aufgeführten; bevorzugte und besonders bevorzugte Carbonsäuren sind ebenfalls die bereits aufgeführten.

Vierwertige Alkohole sind beispielsweise Pentaerythrit und Mesoerythrit.

Fünfwertige Alkohole sind beispielsweise Arabit, Ribit und Xylit.

Sechswertige Alkohole sind beispielsweise Mannit, Glucit (Sorbit) und Dulcit.

Die Ester der vier- bis sechswertigen Alkohole und der gesättigten, aliphatischen Monocarbonsäuren sind als solche entweder literaturbekannt oder nach literaturbekannten Verfahren herstellbar.

Erfindungsgemäß zu verwendende Ester sind beispielsweise Pentaerythrit-tetrastearat, Pentaerythrit-tetrapalmitat, Pentaerythrit-tetramyristat, Pentaerythrit-tetralaurat, Mesoerythrit-tetralaurat, Mesoerythrit-tetrastearat, Mesoerythrit-tetramyristat, Xylitpenta-stearat, Xylit-pentatridecansäureester, Xylit-penta-palmitat, Arabit-pentastearat, Arabit-penta-palmitat, Sorbit-hexa-stearat, Sorbit-hexa-pentadecansäureester, Sorbit-hexa-palmitat, Dulcit-hexa-monodecansäureester, Dulcit-hexa-palmitat," Mannit-hexa-stearat, Mannit-hexa-myristat und Mannit-hexa-laurat.

Erfindungsgemäß geeignete Teilester sind beispielsweise Pentaerythrit-di-stearat, Pentaerythrit-tri-stearat, Pentaerythrit-mono, di- und tri-palmitat, Mesoerythrit-trilaurat, Xylit-di-, tri- und tetra-stearat, Xylit-di-, tri- und tetratridecansäureester, Sorbit-tri, tetra- und penta-stearat und Sorbit-tri, tetra- und penta-mono-decansäureester. Es können auch Gemische, insbesondere statistische Gemische der erfindungsgemäß geeigneten Teilester eingesetzt werden. (Siehe dazu US-PS 4 131 575 (Le A 16 284-US-(IP)).

Geeignete UV-Absorber sind solche Verbindungen, die auf Grund ihres Absorptionsvermögens unterhalb von 400 nm in der Lage sind, Polycarbonat wirksam vor UV-Licht zu schützen und ein Molekulargewicht von mehr als 370, vorzugsweise von 500 g/mol und größer besitzen.

Geeignete UV-Absorber sind insbesonders solche der Formel (II)

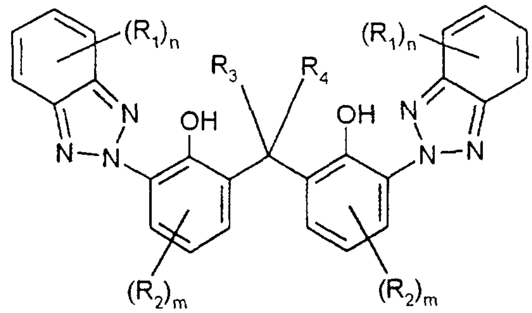

(II)

worin

$R^1$ und $R^2$ gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^5$ oder -(CO)-O-$R^5$ bedeuten, mit $R^5$ = H, oder $C_1$-$C_4$-Alkyl,

$R^3$ und $R^4$ ebenfalls gleich oder verschieden sind und H, $C_1$-$C_4$-Alkyl, $C_5$-$C_6$-Cycloalkyl, Benzyl oder $C_6$-$C_{14}$-Aryl bedeuten,

m 1, 2 oder 3 ist und

n 1, 2, 3 oder 4 ist,

sowie solche der Formel (III)

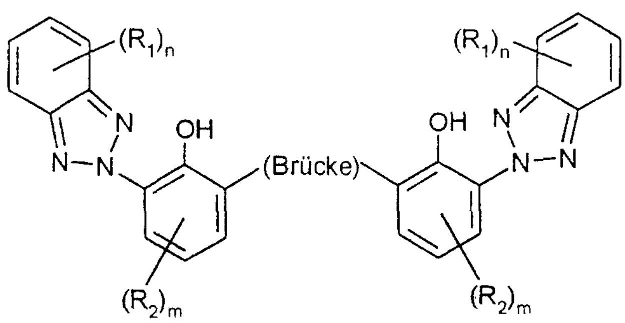

(III),

worin die Brücke

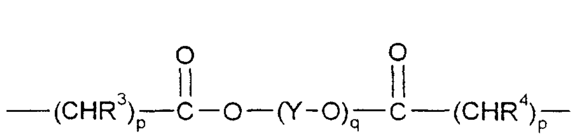

bedeutet,

$R^1$, $R^2$, m und n die für Formel (II) genannte Bedeutung haben,

worin außerdem

p eine ganze Zahl von 0 bis 3 ist,

q eine ganze Zahl von 1 bis 10 ist,

Y $-CH_2-CH_2-$, $-(CH_2)_3-$, $-(CH_2)_4-$, $-(CH_2)_5-$, $-(CH_2)_6-$, oder

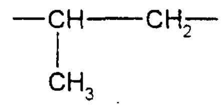

ist und

$R^3$ und $R^4$ die für Formel (II) genannte Bedeutung haben.

Ein weiterer geeigneter UV-Absorber ist beispielsweise Tivunin 840 der Ciba AG. Weitere geeignete UV-Absorber sind solche, die substituierte Triazine darstellen,
wie z.B. das 2,4-Bis(2,4-dimethylphenyl)-6-(2-hydroxy-4-n-octyloxyphenyl)-1,3,5-triazin, welches von der Firma Cytec unter dem Namen CYASORB UV-1164 vertrieben wird (Molgewicht 510),
beziehungsweise das 2-(4,6-Diphenyl-1,3,5-triazin-2-yl)-5-(hexyl)oxy-Phenol, welches von Ciba unter dem Namen Tinuvin 1577 vermarktet wird (Molgewicht 383).

Besonders bevorzugt ist als UV-Absorber 2,2-Methylenbis-(4-(1,1,3,3-tetramethyl-butyl)-6-(2H-benztriazol-2-yl)phenol), welches z.B. unter dem Handelsnamen Tinuvin 360 von der Ciba AG vertrieben wird oder als Mark LA 31 im Handel ist.

Die Einarbeitung der UV-Absorber in die Polycarbonate erfolgt in bekannter Weise durch Vermischen von Polycarbonatgranulat mit dem UV-Absorber(n) und anschließende Extrusion oder durch Vermischen der Lösungen der Polycarbonate in organischen Lösungsmitteln, beispielsweise in $CH_2Cl_2$, mit Lösungen der UV-Absorber in den gleichen oder verschiedenen Lösungsmitteln, beispielsweise in Aceton, und anschließende Ausdampfung der Lösungsmittel in bekannter Weise.

Die Einarbeitung der Entformungsmittel kann in gleicher Weise erfolgen.

Gegenstand der vorliegenden Erfindung ist auch ein Verfahren zur Herstellung der erfindungsgemäßen Formmassen, das dadurch gekennzeichnet ist, daß man entweder in bekannter Weise das Polycarbonatgranulat mit dem UV-Absorber und den beiden Entformungsmitteln vermischt und anschließend extrudiert oder in bekannter Weise Lösungen der Polycarbonate in organischen Lösungsmitteln mit Lösungen des UV-Absorbers und der beiden Entformungsmittel in den gleichen oder verschiedenen Lösungsmitteln vermischt und das oder die Lösungsmittel in bekannter Weise ausdampft.

Weiterhin können die für Polycarbonate bekannten Stabilisatoren wie Phosphine, Phosphite oder Si-haltige Stabilisatoren zugesetzt werden. Außerdem ist der Zusatz von Flammschutzmitteln, Pigmenten, Farbmitteln, fein zerteilten Mineralien und anderen Zuschlagsstoffen möglich. Der Zusatz kann vor, zusammen, mit oder nach dem erfindungsgemäßen Zusatz der UV-Absorber und der Entformungsmittel erfolgen.

Die UV-Absorber-haltige Deckschicht aus den erfindungsgemäßen Polycarbonaten hat eine Dicke von 10 µm bis 100 µm.

Polycarbonatplatten, die erfindungsgemäß beschichtet werden, sind sowohl Massivplatten, vorzugsweise von einer Dicke von 0,5 mm bis 15 mm, und Hohlkammerplatten oder Stegdoppelplatten, vorzugsweise einer Dicke von 4 mm bis 40 mm.

Derartige Platten aus Polycarbonat sind in Literatur und Praxis bekannt; sie können aus linearen oder verzweigten thermoplastischen Polycarbonaten bestehen, deren Molekulargewichte $\overline{M}_w$ (Gewichtsmittel, ermittelt durch Messung der rel. Viskosität in $CH_2Cl_2$ bie 25°C und einer Konzentration von 0,5 g in 100 ml $CH_2Cl_2$) zwischen 27 000 und 40 000, vorzugsweise zwischen 30 000 und 36 000 und insbesondere zwischen 32 000 und 36 000 liegen. Ansonsten kann auf die Ausführungen zu den linearen und verzweigten Polycarbonaten für die UV-Absorber-haltige Deckschicht verwiesen werden, wobei die Dosierung der Kettenabbrecher zur Einstellung der entsprechenden Molekulargewichte dem Fachmann geläufig ist.

Die Polycarbonatplatten, die erfindungsgemäß beschichtet werden, können natürlich auch eine Basismenge an UV-Stabilisatoren enthalten, also beispielsweise 0,1 Gew.-% bis 0,5 Gew.-%, bezogen auf das Gewicht der Polycarbonatplatte ohne Beschichtung.

Weiterhin können die Polycarbonatplatten, die erfindungsgemäß beschichtet werden, auch die für thermoplastische Polycarbonate üblichen anderen Additive enthalten.

Die Einarbeitung der UV-Absorber und der üblichen anderen Additive in die Polycarbonatplatten erfolgt beispielsweise in das entsprechende Polycarbonatgranulat in bekannter Weise, ehe dieses zu den Polycarbonatplatten verarbeitet wird.

Die Coextrusion als solche ist literaturbekannt (s. beispielsweise EP 110 221 und EP 110 238). Im vorliegenden Fall wird vorzugsweise wie folgt verfahren:

An einem Coextrusionsadapter sind Extruder zur Erzeugung der Kernschicht und Deckschicht(en) angeschlossen. Der Adapter ist so konstruiert, daß die die Deckschichten formenden Schmelzen als dünne Schicht haftend auf die Schmelze der Kernschicht aufgebracht wird.

Der so erzeugte, mehrschichtige Schmelzestrang wird dann in der anschließend angeschlossenen Düse in die gewünschte Form (Steg- oder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung oder Kalandrierung ein Temperofen zur Eliminierung von Spannungen angebracht werden.

Anstelle des vor der Düse angebrachten Adapters kann auch die Düse selbst so ausgelegt sein, daß dort die Zusammenführung der Schmelze erfolgt.

Die nach dem erfindungsgemäßen Verfahren erhältlichen Schichtstoffe aus thermoplastischen Polycarbonaten sind überall dort einsetzbar, wo Formteile, insbesondere Platten aus thermoplastischen Polycarbonaten der Bewitterung ausgesetzt sind, also in Gewächshäusern, Bahnhofshallen, etc.

Die erfindungsgemäß erhältlichen Schichtstoffe können noch durch eine nachträgliche Oberflächenbearbeitung, z.B. durch Ausrüsten mit Kratzfestlacken oder durch Aufbringen von wasserspreitenden Schichten vergütet werden.

## Beispiele

Die verwendeten Maschinen und Apparate zur Herstellung von mehrschichtigen Massiv- und Stegplatten werden im Folgenden beschrieben.

### 1. Einrichtung zur Herstellung von Stegplatten

1.1 Die Einrichtung besteht aus

- dem Hauptextruder mit einer Schnecke der Länge 33D und einem Durchmesser von 70 mm mit Entgasung
- dem Coexadapter (Feedblock-System)
- einem Coextruder zum Aufbringen der Deckschicht mit einer Schnecke der Länge 25D und
- einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch

Das Polycarbonat-Granulat des Hauptmaterials wird dem Fülltrichter des Hauptextruders zugeführt, das UV-Coextrusionsmaterial dem des Coextruders. Im jeweiligen Plastifiziersystem Zylinder / Schnecke erfolgt das Aufschmelzen und Fördern des jeweiligen Materials. Beide Materialschmelzen werden im Coexadapter zusammengeführt und bilden nach Verlassen der Düse und Abkühlen im Kalibrator einen Verbund. Die weiteren Einrichtungen dienen dem Transport, Ablängen und Ablegen der extrudierten Platten.

Es wurden folgende Mischungen als UV-Coextrusionsmaterial eingesetzt: Mischung A stellt ein mit 0,3 mol-% Isatinbiskresol verzweigtes Bisphenol-A-Polycarbonat mit $\overline{M}_w$ 28 000 mit einer relativen Lösungsviskosität von 1,28 dar, welches mit 0,23 Gew.-% Pentaerythrittetrastearat und 7,0 Gew.-% des dimeren UV-Absorbers Tinuvin 360 bzw. Mark LA 31 der Formel (IIa)

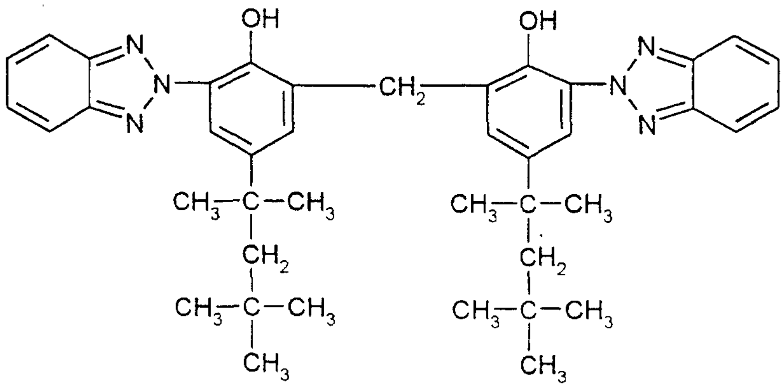

versetzt wurde (Vergleich).

Mischung B entspricht Mischung A mit der Ausnahme, daß anstelle des Pentaerythrittetrastearates 0,2 Gew.-% Glycerinmonostearat eingesetzt wurden (Vergleich).

Mischung C entspricht Mischung A mit dem Unterschied, daß die Menge an Pentaerythrittetrastearat auf 0,2 Gew.-% reduziert wurde und zusätzlich 0,05 Gew.-% Glycerinmonostearat zugesetzt wurden (Erfindung).

Mischung D entspricht Mischung A mit dem Unterschied, daß die Menge an Pentaerythrittetrastearat auf 0,05 Gew.-% reduziert wurde und zusätzlich 0,2 Gew.-% Glycerinmonostearat zugesetzt wurden (Vergleich).

Mischung E entspricht Mischung D mit dem Unterschied, daß die Menge an dimeren UV-Absorber Mark LA 31 beziehungsweise Tinuvin 360 nicht 7,0 Gew.-%, sondern 0,7 Gew.-% beträgt (Vergleich).

Als Polycarbonathauptmaterial wurde in allen Fällen das gleiche verzweigte Bisphenol-A-Polycarbonat eingesetzt mit $\overline{M}_W$ 28.000.

Welligkeit: Die Welligkeit wurde visuell im schrägen Auflicht beurteilt.

UV-Absorberablagerung: Bewertet wurde die Menge an UV-Absorber am Kalibratoreingang (Einlaufphase) nach 5 h Produktionszeit.

PC-Abrieb: Bewertet wurde die Menge an pulvrigen Ablagerung im Kalibrator nach einer Versuchslaufzeit von 5 Stunden.

Yellowness-Index: Der Yellowness-Index wurde an unbewitterten bzw. bewitterten Stegplatten nach DIN 6167 ermittelt. Die Bewitterung der Stegplatten erfolgte in einem Xenon-Weatherometer nach DIN 53 387.

Klebeeffekte: Die Klebeeffekte wurden beurteilt über die Intensität von Klebemarkierungen auf der Plattenoberfläche nach Verlassen des Glättkalanders.

Die folgende Tabelle zeigt die Ergebnisse.

| | | **Qualitätsmerkmale der PC-Platte** | | | |
|---|---|---|---|---|---|
| | UV-Batch mit: | Welligkeit | UV-Absorberablagerung | PC-Abrieb | Yellowness-index nach 2 000 h Xe-WOM |
| $A_{(V)}$ | 7 % Tinuvin 360 + 0,23 % PETS | stark | stark | gering | 3 |
| $B_{(V)}$ | 7 % Tinuvin 360 + 0,2 % GMS | gering | gering | stark | 3 |
| $C_{(E)}$ | 7 % Tinuvin 360 + 0,2 % PETS + 0,05 % GMS | gering | gering | gering | 3 |
| $D_{(V)}$ | 7 % Tinuvin 360 + 0,05 % PETS + 0,2 GMS | gering | gering | stark | 3 |
| $E_{(V)}$ | 0,7 % Tinuvin 360 + 0,05 % PETS + 0,2 GMS | gering | gering | stark | 8 |

Bei der Mischung A ist die Gleitwirkung durch die Verwendung eines Entformungsmittels zwar prinzipiell zwischen Kunststoff und Metall im Kalibrator verbessert, jedoch mußte nach einer bestimmten Produktionszeit der Kalibrator von abgelagertem UV-Absorber gereinigt werden, da die Querwelligkeit der Stegplatte das zulässige Maß überschritt oder/und weil UV-Absorber-Ablagerungen auf der Plattenoberfläche auftrat.

Bei der Mischung B ergab sich als Negativeffekt erhöhte Friktion im Kalibrator, die sich zum einen in Geräuschentwicklung (hoher Pfeifton) und zum anderen in erhöhtem PC-Abrieb mit der Folge von pulvrigen Ablagerungen auf der Platte äußerten. Diese Ablagerungen führen dann bei der nach dem Kalibrator angeschlossenen Temperung zum Anbacken und damit zu Qualitätsmängeln an der Plattenoberfläche.

Die Mischung C besaß ein ausgezeichnetes Verarbeitungsverhalten. Unzulässige Querwelligkeit und/oder UV-Absorber-Ablagerungen traten deutlich später auf. Störenden Abrieb auf der Platte (pulverförmiges PC) wurde nicht festgestellt. Es gelang, die Reinigungsintervalle im Vergleich zu den Versuchen A und B deutlich, d.h. bis auf das Doppelte bis Dreifache, zu verlängern.

## 2. Einrichtung zur Herstellung von coextrudierten Massivplatten

2.1 Die Einrichtung besteht aus

- dem Hauptextruder mit einer Schnecke der Länge 33D und einem Durchmesser von 75 mm mit Entgasung
- dem Coexadapter (Feedblock-System)
- einem Coextruder zum Aufbringen der Deckschicht mit einer Schnecke der Länge 25D und
- einem Durchmesser von 30 mm
- der Breitschlitzdüse mit 600 mm Breite
- dem Glättkalander mit horizontaler Walzenanordnung, wobei die dritte Walze um 45° gegenüber der Horizontalen schwenkbar ist
- der Rollenbahn
- der Abzugseinrichtung
- der Ablängvorrichtung (Säge)
- dem Ablagetisch

  Das Polycarbonathauptmaterial sowie die Polycarbonat-UV-Coextrusionsmaterialien A), B) und C) entsprechen dem der Stegplattenherstellung.

2.2 Durchführung

Das Polycarbonat-Granulat des Hauptmaterials wird dem Fülltrichter des Hauptextruders zugeführt, das UV-Coextrusionsmaterial dem des Coextruders. Im jeweiligen Plastifiziersystem Zylinder/Schnecke erfolgt das Aufschmelzen und Fördern des jeweiligen Materials. Beide Materialschmelzen werden im Coexadapter zusammengeführt und bilden nach Verlassen der Düse und Abkühlen auf dem Glättkalander einen Verbund. Dabei kann die UV-Coexschicht sowohl einseitig als auch auf beiden Seiten der Basisschicht aufgebracht werden. Die weiteren Einrichtungen dienen dem Transport, Ablängen und Ablegen der extrudierten Platten.

Bei der Herstellung von Plattendicken größer 1 mm gelangt die Schmelze aus der Düse kommend in den Spalt zwischen Walze 1 und 2 und erfährt dort eine Glättung und Abkühlung beidseitig an den Walzenoberflächen. Dazu ist es erforderlich, mit einem geringen Schmelzeüberschuß zu arbeiten, der sich im sogenannten Knet oder Wulst vor dem Walzenspalt befindet.

Bei herzustellenden Platten von <1 mm Dicke kann auch ohne Glättung im Walzenspalt gearbeitet werden (Chillrollverfahren).

Die folgende Tabelle zeigt die erreichten Ergebnisse bei der Herstellung von Massivplatten:

| UV-Batch mit | Klebeeffekt der Masivplatte auf den Walzen |
|---|---|
| A) | stark |
| B) | stark |
| C) | gering |

Bei Mischung A) oder B) ist zwar die Klebewirkung gegenüber einem UV-Batch ohne Gleit- und Entformungsmittel verringert, jedoch treten noch Oberflächenstörungen auf der Platte auf, die die Qualität beeinträchtigen.

Bei Mischung C) ist eine nochmals deutlich verringerte Klebeneigung festzustellen, so daß eine optimale Qualität erreicht wird.

## Patentansprüche

1. Formmassen enthaltend

   a) thermoplastische aromatische Polycarbonate mit einem Gewichtsmittelmolekulargewicht $\overline{M}_w$ von 27 000 bis 40 000 und

   b) einen UV-Absorber, der ein Molekulargewicht von 370 und größer hat, in Mengen von 3,5 Gew.-% bis 20 Gew.-%, bezogen auf Gewicht Polycarbonat und

   c) 2 Arten von Entformungsmitteln bestehend aus

      c.1) Glycerinmonofettsäureestern in Mengen von 0,01 bis 0,1 Gew.-%, bezogen auf Gewicht Polycarbonat, und

      c.2) (Teil)Estern von vier- bis sechswertigen Alkoholen, in Mengen von 0,05 bis 0,25 Gew.-%, bezogen auf Gewicht Polycarbonat,

   dadurch gekennzeichnet, daß das Gewichtsverhältnis von c.1) zu c.2) zwischen 1/25 und 1/2 liegt.

2. Formmassen nach Anspruch 1, dadurch gekennzeichnet, daß das Gewichtsverhältnis von c.1) zu c.2) zwischen 4/25 und 10/25 liegt.

3. Verfahren zur Herstellung der Formmassen des Anspruchs 1, dadurch gekennzeichnet, daß man entweder in bekannter Weise das Polycarbonatgranulat mit dem UV-Absorber und den beiden Entformungsmitteln vermischt und anschließend extrudiert oder in bekannter Weise Lösungen der Polycarbonate in organischen Lösungsmitteln mit Lösungen des UV-Absorbers und der beiden Entformungsmittel in den gleichen oder verschiedenen Lösungsmitteln vermischt und das oder die Lösungsmittel in bekannter Weise ausdampft.

4. Verwendung der Formmassen des Anspruchs 1 als UV-Absorber-haltige Deckschicht.

5. Verwendung der Formmassen des Anspruchs 1 als Außenschicht in coextrudierten Polycarbonatplatten.

6. Verfahren zur Herstellung von Schichtstoffen aus thermoplastischen Polycarbonaten durch die bekannte Methode der Coextrusion, dadurch gekennzeichnet, daß man für die Außenschicht der Schichtstoffe die Formmassen des Anspruchs 1 einsetzt.

7. Schichtstoffe aus thermoplastischen Polycarbonaten erhältlich nach dem Verfahren des Anspruchs 6.

## Claims

1. Moulding compositions containing

   a) thermoplastic, aromatic polycarbonates with a weight average molecular weight of 27,000 to 40,000,

   b) a concentration of UV absorber with a molecular weight of 370 or more in amounts of 3.5 wt.% to 20 wt.%, with respect to the weight of polycarbonate and

   c) 2 types of mould release agent comprising

      c.1) monoesters formed from glycerine and a fatty acid, in amounts of 0.01 to 0.1 wt.%, with respect to the weight of polycarbonate, and

      c.2) (partial) esters of tetra- to hexahydric alcohols, in amounts of 0.05 to 0.25 wt.%, with respect to the weight of polycarbonate,

   characterised in that the ratio by weight of c.1) to c.2) is between 1:25 and 1:2.

2. Moulding compositions according to Claim 1, characterised in that the ratio by weight of c.1) to c.2) is between 4:25 and 10:25.

3. A process for preparing moulding compositions according to Claim 1, characterised in that either the polycarbonate granules are mixed with the UV absorber and the two mould release agents and then extruded in a known manner or solutions of the polycarbonates in organic solvents are mixed with solutions of the UV absorber and the two mould release agents in the same or different solvents in a known manner and the solvent or solvents are evaporated in a known manner.

4. Use of moulding compositions according to Claim 1 as UV absorber-containing outer layers.

5. Use of the moulding compositions according to Claim 1 as an external layer on coextruded polycarbonate sheets.

6. A process for preparing laminated materials made of thermoplastic polycarbonates using the known method of coextrusion, characterised in that the moulding compositions according to Claim 1 are used for the external layer on the laminated materials.

7. Laminated materials made of thermoplastic polycarbonates obtainable by the process in Claim 6.

## Revendications

1. Matières à mouler contenant

   a) des polycarbonates aromatiques thermoplastiques ayant une masse molaire moyenne en poids $\overline{M}_w$ comprise entre 27 000 et 40 000,
   b) un absorbant d'UV ayant une masse molaire d'au moins 370, en des quantités de 3,5 à 20 % en masse par rapport à la masse de polycarbonate, et
   c) 2 types d'agents de démoulage constitués par

      c.1) des monoesters d'acides gras du glycérol en des quantités de 0,01 à 0,1 % en masse par rapport à la masse de polycarbonate et
      c.2) des esters (partiels) d'alcools ayant 4 à 6 fonctions alcool, en des quantités de 0,05 à 0,25 % en masse par rapport à la masse de polycarbonate,

   caractérisées en ce que le rapport en masse de c.1) à c.2) est compris entre 1/25 et 1/2.

2. Matières à mouler selon la revendication 1, caractérisées en ce que le rapport en masse de c.1) à c.2) est compris entre 4/25 et 10/25.

3. Procédé de préparation des matières à mouler selon la revendication 1, caractérisé en ce que, soit on mélange de façon connue les granulés de polycarbonates avec l'absorbant d'UV et les deux agents de démoulage, puis on procède à une extrusion, soit on mélange de façon connue des solutions des polycarbonates dans des solvants organiques avec des solutions de l'absorbant d'UV et des deux agents de démoulage dans les mêmes solvants ou dans d'autres solvants et on évapore le ou les solvants de façon connue.

4. Utilisation des matières à mouler selon la revendication 1 comme couche de revêtement contenant des absorbants d'UV.

5. Utilisation des matières à mouler selon la revendication 1 comme couche externe dans des plaques de polycarbonate coextrudées.

6. Procédé de préparation de stratifiés à base de polycarbonates thermoplastiques par le procédé connu de coextrusion, caractérisé en ce que l'on utilise pour la couche externe des stratifiés les matières à mouler de la revendication 1.

7. Stratifiés à base de polycarbonates thermoplastiques pouvant être obtenus par le procédé de la revendication 6.